# EUROPEAN PATENT APPLICATION

(11) **EP 4 336 896 A1**
(43) Date of publication of application: **13.03.2024**
(21) Application number: 21939815.3
(22) Date of filing: 06.05.2021
(51) Int. Cl.: H04W 28/04

(54) **TERMINAL AND WIRELESS COMMUNICATION METHOD**

(71) Applicant: NTT DOCOMO, INC., Chiyoda-ku Tokyo 100-6150 (JP)
(72) Inventor: YOSHIOKA, Shohei, Tokyo 100-6150 (JP); MATSUMURA, Yuki, Tokyo 100-6150 (JP); NAGATA, Satoshi, Tokyo 100-6150 (JP)
(74) Representative: Hoffmann Eitle
(86) International application number: PCT/JP2021/017401
(87) International publication number: WO 2022/234622

(57) **Abstract**

A terminal receives downlink control information and performs at least one of enabling or disabling feedback of an automatic retransmission request in a downlink channel based on a field concerning priority contained in the downlink control information in data distribution for a plurality of terminals.

## Description

### [Technical Field]

The present disclosure relates to a terminal and a radio communication method corresponding to a multicast/broadcast service.

### [Background Art]

3rd Generation Partnership Project (3GPP) specifies 5th generation mobile communication system (5G, also called New Radio (NR) or Next Generation (NG), further, a succeeding system called Beyond 5G, 5G Evolution or 6G is being specified.

Release 17 of the 3GPP covers simultaneous data transmission (also called broadcasting) services (tentatively called Multicast and Broadcast Services (MBS)) to specified or unspecified multiple terminals (User Equipment, UE) in NR (Non-Patent Literature 1).

For example, MBS is studying scheduling and reliability improvement (For example, HARQ (Hybrid Automatic repeat request) feedback to the radio base station (gNB)) of UE groups subject to services.

### [Citation List]

### [Non-Patent Literature]

### [Non-Patent Literature 1]

"New Work Item on NR support of Multicast and Broadcast Services," RP-193248, 3GPP TSG RAN Meeting #86, 3GPP, December 2019

### [Summary of Invention]

In MBS, positive response (ACK) and negative response (NACK) of HARQ can be fed back to gNB.

However, there is a problem that it is difficult for the UE to quickly and surely recognize when the feedback of the HARQ (automatic retransmission request) is enabled and disabled (enable/disable).

Therefore, the following disclosure is made in view of this situation, and is intended to provide a terminal and a radio communication method that can quickly and surely recognize the activation and invalidation of the feedback of the automatic retransmission request in the simultaneous data transmission service to a plurality of specified or unspecified terminals.

An aspect of the present disclosure is a terminal (UE200) including a reception unit (control signal and reference signal processing unit 240) that receives downlink control information, and a control unit (control unit 270) that performs at least one of enabling or disabling feedback of an automatic retransmission request in a downlink channel based on a priority field included in the downlink control information in data distribution for a plurality of terminals.

An aspect of the present disclosure is a terminal (UE200) including a reception unit (radio signal transmission and reception unit 210) that receives a downlink data channel in data distribution for a plurality of terminals and a control unit (control unit 270) that assumes that, when semi-persistent scheduling is applied to the downlink data channel, an instruction to enable or disable feedback of an automatic retransmission request by the downlink control information via the downlink control channel common to a terminal group is applied to a reception of the downlink data channel immediately after the downlink control information and a reception of a subsequent downlink data channel.

An aspect of the present disclosure is a terminal (UE200) including a reception unit (radio signal transmission and reception unit 210) that receives a downlink data channel in data distribution for a plurality of terminals, and a control unit (control unit 270) that assumes that, when semi-persistent scheduling is applied to the downlink data channel, an instruction to enable or disable feedback of an automatic retransmission request by the downlink control information via the downlink control channel common to the terminal group is applied to a reception of a subsequent downlink data channel excluding the downlink data channel immediately after the downlink control information.

An aspect of the present disclosure is a terminal (UE200) including a reception unit (radio signal transmission and reception unit 210) for receiving a downlink data channel in data distribution for a plurality of terminals, and a control unit (control unit 270)that determines, when releasing the downlink data channel to which semi-persistent scheduling is applied, whether feedback of an automatic retransmission request applied when the downlink data channel is released, is valid or invalid based on enabling or disabling of the feedback of the automatic retransmission request applied when the downlink data channel is received.

An aspect of the present disclosure is a radio communication method including the step of receiving downlink control information, and performing at least one of enabling or disabling feedback of an automatic retransmission request in the downlink channel based on a priority field included in the downlink control information in data distribution for a plurality of terminals.

An aspect of the present disclosure is a radio communication method including the step of receiving a downlink data channel in data distribution for a plurality of terminals, and when semi-persistent scheduling is applied to the downlink data channel, assuming that an instruction to enable or disable feedback of an automatic retransmission request by downlink control information via the downlink control channel common to a terminal group is applied to a reception of the downlink data channel immediately after the downlink control information and a reception of a subsequent downlink data channel.

### [Brief Description of Drawings]

[Fig. 1]

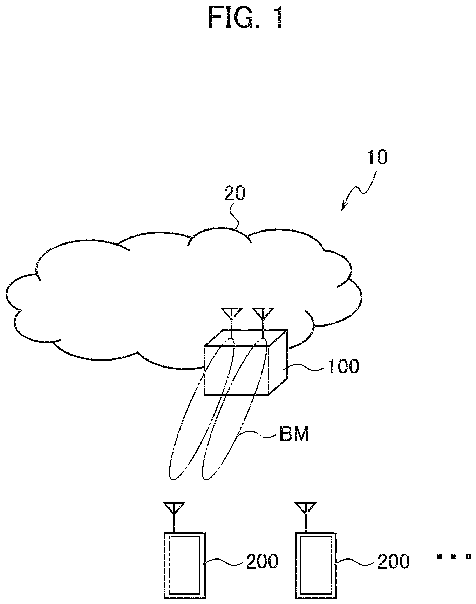

   Fig. 1 is an overall schematic diagram of a radio communication system 10.
[Fig. 2]

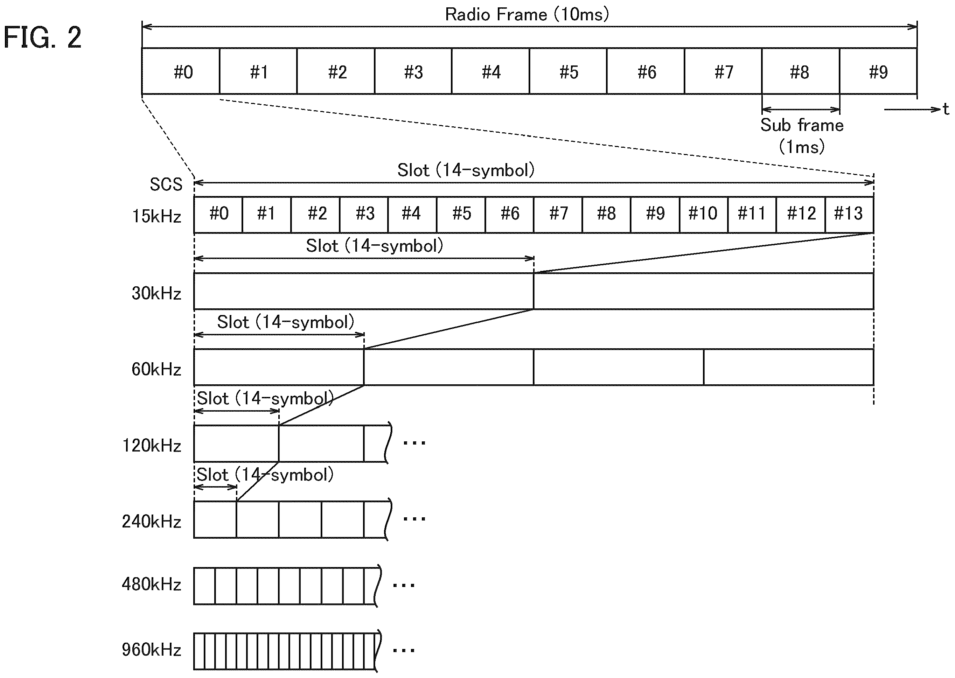

   Fig. 2 is a diagram showing a configuration example of a radio frame, a sub-frame and a slot used in the radio communication system 10.
[Fig. 3]

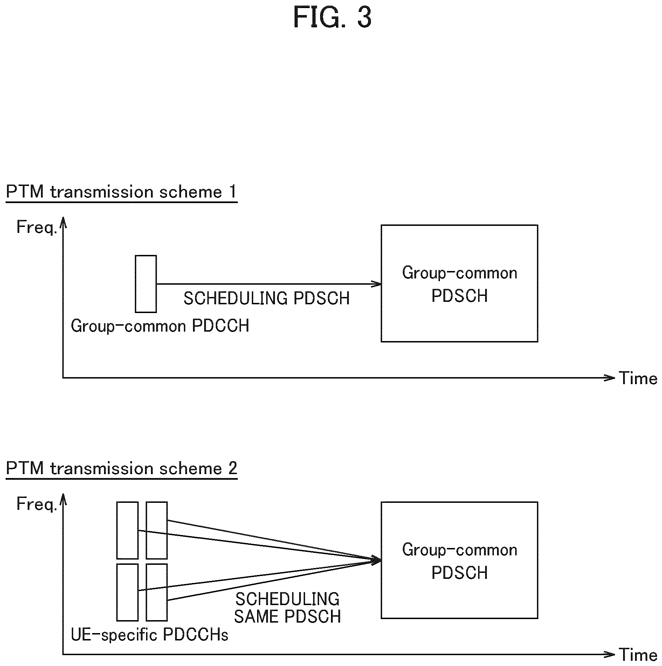

   Fig. 3 is a diagram showing a configuration example of the PTM transmission system 1 and the PTM transmission system 2.
[Fig. 4]

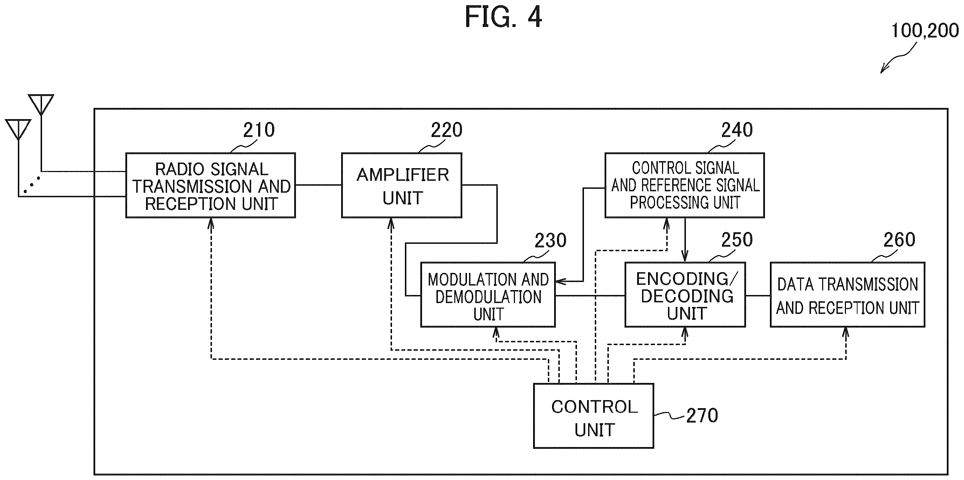

   Fig. 4 is a functional block diagram of a gNB100 and a UE200.
[Fig. 5]

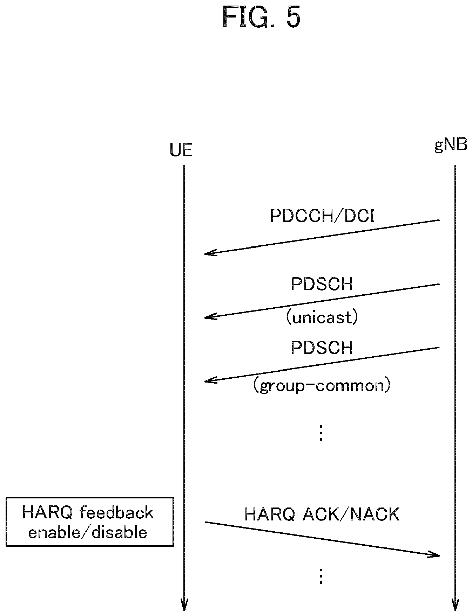

   Fig. 5 is a diagram showing an example sequence of PDCCH (including DCI), PDSCH and HARQ feedback in MBS.
[Fig. 6]

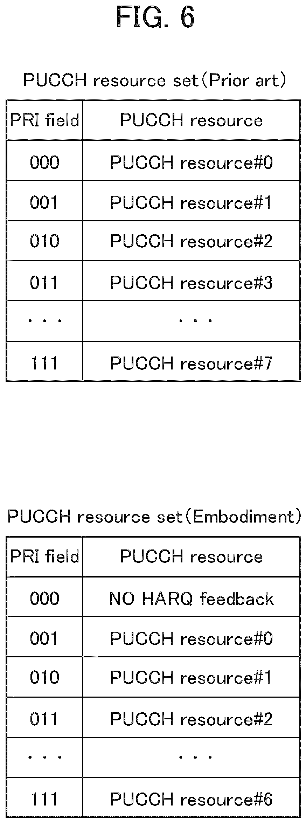

   Fig. 6 is a diagram showing an example of correspondence between PRI and PUCCH resource set according to operation example 1-2.
[Fig. 7]

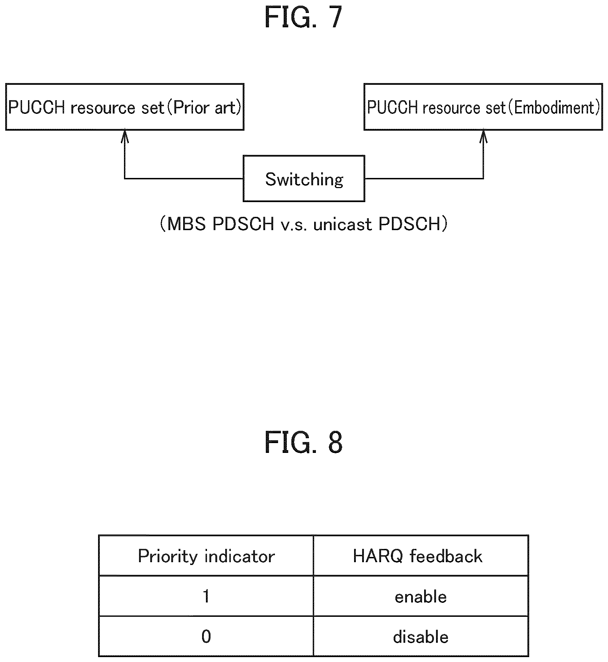

   Fig. 7 is an explanatory diagram of the switching operation of the PUCCH resource set according to the operation example 1-3.
[Fig. 8]
   Fig. 8 is a diagram showing an example of correspondence between the priority indicator and the HARQ feedback in the operation example 3-1 and the operation example 3-2.
[Fig. 9]

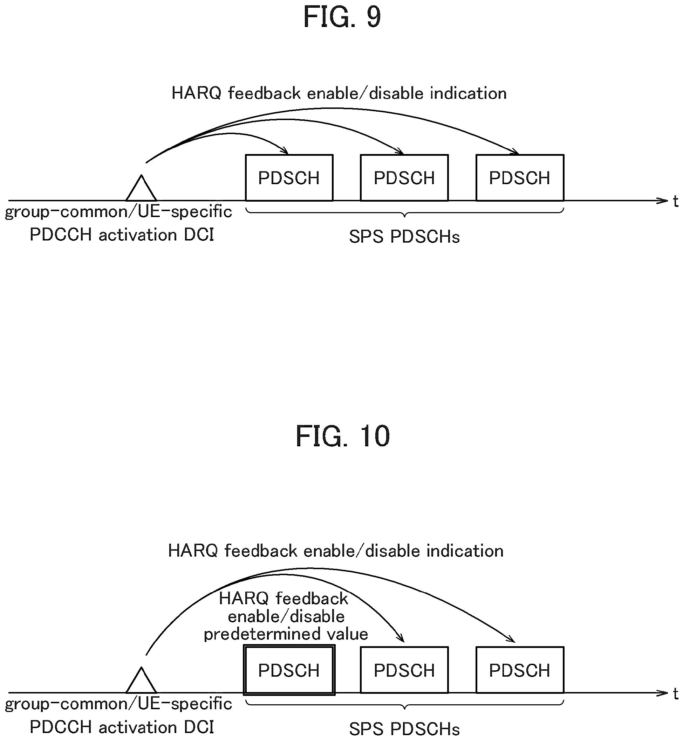

   Fig. 9 is a diagram showing an example of a correspondence relationship between DCI and PDSCH according to the operation example 4.
[Fig. 10]
   Fig. 10 is a diagram showing an example of a correspondence relationship between DCI and PDSCH according to the operation example 5.
[Fig. 11]

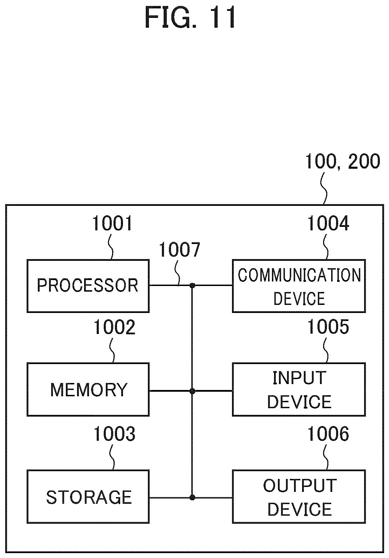

   Fig. 11 is a diagram showing an example of a hardware configuration of the gNB100 and the UE200.

### [Modes for Carrying out the Invention]

Exemplary embodiments of the present invention are explained below with reference to the accompanying drawings. Note that, the same or similar reference numerals have been attached to the same functions and configurations, and the description thereof is appropriately omitted.

### (1) Overall schematic configuration of the radio communication system

### (1.1) System configuration example

Fig. 1 is an overall schematic configuration diagram of a radio communication system 10 according to the present embodiment. The radio communication system 10 is a radio communication system according to 5G New Radio(NR) and includes the Next Generation-Radio Access Network 20 (hereinafter referred to as the NG-RAN20 and a plurality of terminals 200 (User Equipment 200, UE200).

The radio communication system 10 may be a radio communication system according to a system called Beyond 5G, 5G Evolution or 6G.

The NG-RAN20 includes a radio base station 100 (gNB100). The specific configuration of radio communication system 10 including the number of gNBs and UEs is not limited to the example shown in Fig. 1.

The NG-RAN20 actually includes a plurality of NG-RAN Nodes, specifically gNBs (or ng-eNBs), connected to a core network (5GC, not shown) according to 5G. Note that the NG-RAN20 and 5 GCs may be simply described as "networks ".

The gNB100 is a radio base station according to the NR, and performs radio communication according to the UE200 and the NR. The gNB100 and the UE200 can support Massive MIMO, which generates a more directional beam BM by controlling radio signals transmitted from a plurality of antenna elements, carrier aggregation (CA), which uses a plurality of component carriers (CCs) bundled together, and dual connectivity (DC), which simultaneously communicates between the UE and each of a plurality of NG-RAN nodes.

The radio communication system 10 supports FR1 and FR2. The frequency band of each FR(Frequency Range) is as follows.

▪FR1:410 MHz~7.125 GHz
▪FR2:24.25 GHz~52.6 GHz

FR1 uses sub-carrier spacing (SCS) of 15, 30 or 60 kHz and may use a bandwidth (BW) of 5~100 MHz. FR2 is higher frequency than FR1 and may use SCS of 60 or 120 kHz (may include 240 kHz) and may use a bandwidth (BW) of 50~400 MHz.

In addition, radio communication system 10 may support higher frequency bands than those of FR2. Specifically, radio communication system 10 may support frequency bands greater than 52.6 GHz and up to 114.25 GHz. radio communication system 10 may also support frequency bands between FR1 and FR2.

Cyclic Prefix-Orthogonal Frequency Division Multiplexing(CP-OFDM)/Discrete Fourier Transform-Spread (DFT-S-OFDM) with greater Sub-Carrier Spacing (SCS) may also be applied. Furthermore, DFT-S-OFDM may be applied not only to the uplink (UL) but also to the downlink (DL).

Fig. 2 shows a configuration example of a radio frame, subframe and slot used in radio communication system 10.

As shown in Fig. 2, one slot is composed of 14 symbols, and the larger (wider) the SCS, the shorter the symbol period (and slot period). Note that the number of symbols constituting one slot may not necessarily be 14 symbols (For example, 28, 56 symbols). The number of slots per subframe may vary depending on the SCS. In addition, the SCS may be wider than 240 kHz (For example, as shown in Fig. 2, 480 kHz, 960 kHz).

Note that the time direction (t) shown in Fig. 2 may be referred to as a time domain, symbol period, symbol duration, etc. The frequency direction may be referred to as a frequency domain, resource block, resource block group, subcarrier, BWP (Bandwidth part), subchannel, common frequency resource, etc.

### (1.2) Provision of MBS

The radio communication system 10 may provide Multicast and Broadcast Services (MBS).

For example, in a stadium or hall, a large number of UE200 s may be located in a certain geographic area and a large number of UE200s may simultaneously receive the same data. In such a case, the use of MBS rather than unicast is effective.

Unicast may be interpreted as communication performed 1: 1 with the network by specifying a specific UE200 (UE200 specific identification information may be specified).

Multicast may be interpreted as communication performed 1: 1 with the network by specifying a specific plurality of UE200 (multicast identification information may be specified). As a result, the number of UE200 that receive the received multicast data may be 1.

The broadcast may be interpreted as a communication between all UE200 and the network in an unspecified number. The multicast/broadcast data may have the same copied content, but some content, such as headers, may be different. The multicast/broadcast data may also be transmitted (distributed) simultaneously, but does not necessarily require strict concurrency and may include propagation delays and/or processing delays within the RAN node.

The target UE200 may be in an idle state (RRC idle), a connected state (RRC connected), or any other state (For example, the inactive state) in the wireless resource control layer (RRC). The inactive state may be interpreted as a state in which some settings of the RRC are maintained.

MBS assumes the following three methods for scheduling multicast/broadcast PDSCH(Physical Downlink Shared Channel), specifically scheduling MBS packets (which may be read as data). RRC connected UE may be read as RRC idle UE or RRC inactive UE.

PTM transmission method 1(PTM-1): Schedule group-common PDSCH using group-common PDCCH(Physical Downlink Control Channel) for the MBS group of the RRC connected UE.

Scramble the CRC and PDSCH of the PDCCH using group-common RNTI (Radio Network Temporary Identifier, may be referred to as G-RNTI).

PTM Transmission Method 2(PTM-2): Schedule a group-common PDSCH using a terminal-specific PDCCH for the MBS group of the RRC connected UE.

The CRC of the PDCCH is scrambled by the UE-specific RNTI.

The PDSCH is scrambled by the group-common RNTI.

PTP transmission method: Schedule UE-specific PDSCH using UE-specific PDCCH for RRC connected UE.

Scramble CRC and PDSCH of PDCCH by UE-specific RNTI. In other words, it may mean that MBS packets are transmitted by unicast.

Fig. 3 shows a configuration example of PTM transmission method 1 and PTM transmission method 2. The UE-specific PDCCH/PDSCH may be identified by the target UE, but may not be identified by other UEs in the same MBS group. The group-common PDCCH/PDSCH is transmitted at the same time/frequency resource and can be identified by all UEs in the same MBS group. The names of the PTM transmission methods 1 and 2 are tentative and may be called by different names as long as the operations described above are performed.

In point-to-point (PTP) distribution, the RAN node may wirelessly distribute individual copies of the MBS data packets to individual UEs. In point-to-multipoint (PTM) distribution, the RAN node may wirelessly distribute a single copy of the MBS data packets to a set of UEs.

In order to improve the reliability of MBS, the following two feedback methods are envisaged for HARQ(Hybrid Automatic repeat request) feedback, specifically HARQ feedback for multicast/broadcast PDSCH.

### Option 1: Feedback of both ACK and NACK (ACK/NACK feedback)

▪A UE that has successfully received or decrypted a PDSCH transmits an ACK
▪A UE that has failed to receive or decrypt a PDSCH transmits a NACK
▪PUCCH(Physical Uplink Control Channel) resource configurations: PUCCH-Config can be configured for multicast PUCCH resources: Shared/orthogonal between UEs depends on the network configurations
▪HARQ-ACK CB (codebook): supports type-1 and type-2(CB decision algorithm specified in 3GPP TS 38.213)
▪multiplexing: enable unicast or multicast

### Option 2: NACK-only feedback

▪A UE that successfully receives or decrypts PDSCH does not transmit an ACK (does not transmit a response)
▪A UE that fails to receive or decrypt PDSCH transmits a NACK
▪For a given UE, PUCCH resource configurations can be configured separately by unicast or group cast (multicast)

Note that ACK may be called positive acknowledgement and NACK may be called negative acknowledgement. HARQ may be called automatic retransmit request.

Enable/disable Option 1 or Option 2 may be either:
▪RRC and Downlink Control Information (DCI)
▪RRC only

In addition, the following is expected for semi-persistent scheduling (SPS) for multicast/broadcast PDSCH:
▪Adopts SPS group-common PDSCH
▪Multiple SPS group-common PDSCH can be configured for UE capability
▪HARQ feedback for SPS group-common PDSCH is possible
▪At least activation/deactivation via group-common PDCCH (downlink control channel) is possible

Note that deactivation may be replaced with other synonymous terms such as release. For example, activation may be replaced with start, initiation, trigger, etc., and deactivation may be replaced with end, stop, etc.

SPS is a scheduling used as a contrast to dynamic scheduling and may be referred to as semi-fixed, semi-continuous or semi-persistent scheduling and may be interpreted as Configured Scheduling (CS).

Scheduling may be interpreted as the process of allocating resources to transmit data. Dynamic scheduling may be interpreted as the mechanism by which all PDSCH are scheduled by DCI (For example, DCI 1_0, DCI 1_1, or DCI 1_2). SPS may be interpreted as the mechanism by which PDSCH transmissions are scheduled by higher layer signaling, such as RRC messages.

Also, for the physical layer, there may be a scheduling category of time domain scheduling and frequency domain scheduling.

Also, multicast, group cast, broadcast, and MBS may be interchanged. Multicast PDSCH, PDSCH scrambled by group common RNTI may be read as each other.

Further, data and packet terms may be read as each other and may be interpreted as synonymous with terms such as signal, data unit, etc. Transmission, reception, transmission and delivery may be read as each other.

### (2) Function block configuration of radio communication system

Next, the function block configuration of the radio communication system 10 will be described. Specifically, the function block configuration of the gNB100 and the UE200 will be described.

Fig. 4 is a function block configuration diagram of the gNB100 and the UE200. The UE200 will be described below. As shown in Fig. 4, the UE200 includes a radio signal transmission and reception unit 210, an amplifier unit 220, a modulation and demodulation unit 230, a control signal and reference signal processing unit 240, an encoding/decoding unit 250, a data transmission and reception unit 260, and a control unit 270.

Note that in Fig. 4, only the main functional blocks related to the description of the embodiment are shown, and the UE200 includes other functional blocks (For example, the power supply unit). Fig. 4 also shows the functional block configuration of the UE200(gNB100), and refer to Fig. 8 for the hardware configuration.

The radio signal transmission and reception unit 210 transmits and receives radio signals in accordance with the NR. The radio signal transmission and reception unit 210 corresponds to a Massive MIMO, a CA using a plurality of CCs bundled together, and a DC that simultaneously communicates between a UE and each of two NG-RAN Nodes.

The radio signal transmission and reception unit 210 also corresponds to an MBS, and can receive a downlink channel common to a group of terminals in data distribution for a plurality of UE200. In this embodiment, radio signal transmission and reception unit 210 may comprise reception unit.

Specifically, the radio signal transmission and reception unit 210 can receive the MBS, that is, the downlink data channel (PDSCH) in data distribution for a plurality of terminals.

Further, the radio signal transmission and reception unit 210 can receive the downlink data channel (PDSCH) common to the terminal group, specifically, the group-common PDSCH (which may include the SPS group-common PDSCH). Further, radio signal transmission and reception unit 210 can receive the downlink control channel common to the terminal group, specifically, the group-common PDCCH.

The amplifier unit 220 is configured by a PA (Power Amplifier)/LNA (Low Noise Amplifier) or the like. The amplifier unit 220 amplifies the signal output from the modulation and demodulation unit 230 to a predetermined power level. The amplifier unit 220 amplifies the RF signal output from radio signal transmission and reception unit 210.

The modulation and demodulation unit 230 performs data modulation/demodulation, transmission power setting, resource block allocation, etc., for each predetermined communication destination (gNB100, etc.). In the modulation and demodulation unit 230, Cyclic Prefix-Orthogonal Frequency Division Multiplexing (CP-OFDM)/Discrete Fourier Transform-Spread (DFT-S-OFDM) may be applied. DFT-S-OFDM may be used not only for the uplink (UL) but also for the downlink (DL).

The control signal and reference signal processing unit 240 performs processing related to various control signals transmitted and received by the UE200 and various reference signals transmitted and received by the UE200.

Specifically, the control signal and reference signal processing unit 240 receives various control signals transmitted from the gNB100 via a predetermined control channel, for example, control signals (messages) of the radio resource control layer (RRC). The control signal and reference signal processing unit 240 also transmits various control signals to the gNB100 via a predetermined control channel.

The control signal and reference signal processing unit 240 performs processing using a reference signal (RS) such as a demodulation reference signal (DMRS) and a phase tracking reference signal (PTRS).

The DMRS is a known reference signal (pilot signal) between a base station and a terminal of each terminal for estimating a fading channel used for data demodulation. The PTRS is a reference signal of each terminal for estimating phase noise, which is a problem in a high frequency band.

In addition to the DMRS and the PTRS, the reference signal may include a Channel State Information-Reference Signal (CSI-RS), a Sounding Reference Signal (SRS), and a Positioning Reference Signal (PRS) for position information.

The channel may include a control channel and a data channel. The control channel may include PDCCH, PUCCH (Physical Uplink Control Channel), RACH (Random Access Channel, Downlink Control Information (DCI) with Random Access Radio Network Temporary Identifier (RA-RNTI)), and Physical Broadcast Channel (PBCH).

The data channels include PDSCH and PUSCH (Physical Uplink Shared Channel). Data may mean data transmitted over a data channel.

In this embodiment, the control signal and reference signal processing unit 240 may comprise a reception unit that receives downlink control information (DCI). In addition, control signal and reference signal processing unit 240 may receive a message in the RRC indicating the activation or inactivation of a function for which the activation or inactivation of HARQ feedback is indicated by DCI.

The encoding/decoding unit 250 performs data partitioning/concatenation and channel coding/decoding for each predetermined communication destination (gNB100 or other gNB).

Specifically, the encoding/decoding unit 250 divides the data output from data transmission and reception unit 260 into predetermined sizes and performs channel coding for the divided data. encoding/decoding unit 250 decodes the data output from modulation and demodulation unit 230 and concatenates the decoded data.

The data transmission and reception unit 260 transmits and receives protocol data units (PDU) and service data units (SDU). Specifically, the data transmission and reception unit 260 performs assembly/disassembly of PDUs/SDUs in a plurality of layers (Media access control layer (MAC), radio link control layer (RLC), packet data convergence protocol layer (PDCP), etc.). The data transmission and reception unit 260 also performs error correction and retransmission control of data based on a hybrid automatic repeat request (ARQ).

The control unit 270 controls each function block constituting the UE200. In particular, in the present embodiment, the control unit 270 performs control on the scheduling of the downlink channel with respect to the MBS and the HARQ feedback of the channel.

The control unit 270 performs control corresponding to the scheduling of the downlink data channel common to the terminal group (group common) in the data distribution for the MBS, that is, the plurality of UEs 200. Specifically, the control unit 270 can perform control corresponding to the scheduling of the group-common PDCCH and the group-common PDSCH.

The control unit 270 may at least enable/disable feedback of HARQ (automatic retransmission request) on the downlink channel based on a specific field included in the DCI (downlink control information) in data delivery to the MBS, that is, the plurality of UEs 200.

Specifically, among the fields specified in the format of the DCI (see 3GPP TS38.212, etc.), the field related to HARQ feedback may be used to specify enable/disable of HARQ feedback.

At least one of the following fields may be used:
▪TPC command for scheduled PUCCH
▪PUCCH resource indicator(PRI)
-PDSCH-to-HARQ feedback timing indicator

The field may be specified in DCI format 1_0, 1_1, 1_2, etc.

The control unit 270 may perform either enable/disable of HARQ feedback based on the resource indication field for PUCCH (uplink control channel) included in DCI, specifically the field of PUCCH resource indicator (PRI).

For example, a specific value of PRI (For example, 000) may be associated with no HARQ feedback. Also, a PUCCH resource set that does not include PRI associated with no HARQ feedback may be switched to a PUCCH resource set that includes PRI associated with no HARQ feedback.

The control unit 270 may recognize that enable/disable of HARQ feedback by DCI is specified by signaling at a higher layer (For example, RRC). When control unit 270 receives such signaling, it may switch to the PUCCH resource set including the PRI associated with no HARQ feedback. In addition, when control unit 270 receives signaling in which enable/disable of HARQ feedback by DCI unspecifies, it may switch (return) to the PUCCH resource set not including the PRI associated with no HARQ feedback.

The control unit 270 may not transmit PUCCH resources and may not perform HARQ feedback if DCI dictates no HARQ feedback. A more specific operation for switching the PUCCH resource set will be described later.

Based on the RRC layer messages (which may be read as signaling), the control unit 270 may determine whether the enable/disable of the HARQ feedback based on the specific fields included in the DCI described above is applied.

Specifically, it may be assumed that the control unit 270 receives an instruction to enable or disable the HARQ feedback at the DCI if the message is an activation of the function indicated by the DCI. Further, the control unit 270 may disable the feedback without receiving an instruction to enable or disable the HARQ feedback at the DCI if the message is an inactivation of the function indicated by the DCI.

For example, the control unit 270 may apply any of the following actions depending on the signaling configuration of the RRC.

▪When disable of HARQ feedback is set: It is assumed that DCI enable/disable of HARQ feedback is not always indicated.
▪Enable of HARQ feedback: It is assumed that DCI enable/disable of HARQ feedback is always indicated.

The enable/disable of HARQ feedback may be set for each RNTI (C (Cell)-RNTI/G (Group) -RNTI), or the method of indicating enable/disable of HARQ feedback by DCI may be switched by RRC signaling. For example, the method of indicating by a specific field included in DCI as described above and the method of indicating a plurality of fields in combination may be switched by RRC signaling.

The control unit 270 may also perform at least one of enable/disable of HARQ feedback in the downlink channel based on at least one of the format, identification information, resource or search space associated with DCI.

For example, HARQ feedback enable/disable may be performed based on at least one of DCI format (For example, DCI format 1_0, 1_1, 1_2 containing the specific fields described above.), RNTI (identification information) used to scramble DCI CRCs, CORESET(control resource sets), search space, and PDSCH resources (time/frequency/code/space) .

The control unit 270 may perform at least one of enabling or disabling HARQ feedback on the downlink channel based on priority fields included in DCI in data delivery for multiple UE200 s. Here, the downlink channel assumes the downlink data channel (PDSCH), but may be the downlink control channel (PDCCH).

The DCI may be a DCI (or a DCI format) for scaling the PDSCH for the MBS, and may be a field included in the DCI that indicates priority with respect to the HARQ. For example, the field may be referred to as a Priority indicator field, or may be another field associated with a Priority indication.

The control unit 270 may enable HARQ feedback if the priority is high, and disable HARQ feedback if the priority is low. Alternatively, the control unit 270 may assume that HARQ feedback is enabled or disabled for each value of the priority indicator field. Note that control unit 270 may assume that if the DCI does not include the Priority indicator field, the RRC specifies that HARQ feedback is enabled or disabled.

Further, the control unit 270 may assume that if semi-persistent scheduling (SPS) is applied to the downlink data channel (PDSCH), the instruction to enable or disable HARQ feedback by the DCI via the downlink control channel (group-common PDCCH) common to the terminal group is applied to the reception of the PDSCH immediately after the DCI and to the reception with the subsequent PDSCH.

Specifically, in the case of Multicast SPS PDSCH reception, the control unit 270 may assume that the instruction to enable/disable HARQ feedback in the activation DCI of the group-common PDCCH is applied to the reception with the PDSCH immediately after the activation DCI of the group-common PDCCH and to the reception with the subsequent SPS PDSCH.

Note that Multicast SPS PDSCH reception may mean group-common SPS PDSCH reception, may be SPS PDSCH received by a plurality of terminals, and may be SPS PDSCH reception associated with G-RNTI or G-CS-RNTI (That is, RNTI associated with multiple terminals). Multicast may also be read as Broadcast.

Alternatively, the control unit 270 may assume that when semi-persistent scheduling (SPS) is applied to a downlink data channel (PDSCH), an instruction to enable or disable feedback of HARQ by a DCI via a group-common PDCCH common to a group of terminals is applied to the reception of subsequent PDSCH, excluding the PDSCH immediately following the DCI.

Specifically, in the case of Multicast SPS PDSCH reception, the control unit 270 may assume that the HARQ feedback enable/disable instruction in the activation DCI of the group-common PDCCH is applied only to the subsequent SPS PDSCH reception, and that a predetermined value (For example, enable) is applied to the HARQ feedback for the PDSCH reception immediately after the activation DCI of the group-common PDCCH.

Further, when releasing a downlink data channel (PDSCH) to which semi-persistent scheduling (SPS) is applied, the control unit 270 may determine whether the HARQ feedback applied at the time of the PDSCH release is effective or ineffective based on the activation or ineffectiveness of the HARQ feedback applied at the time of the PDSCH reception.

The release (Release) of the PDSCH may be read as deactivation or the like. The control unit 270 may assume that whether the HARQ feedback for the release (deactivation) of the Multicast SPS PDSCH is enable or disable is set or indicated by any of the methods described above. Alternatively, the control unit 270 may assume that the release of the Multicast SPS PDSCH is the same as the HARQ feedback (enable or disable) applied when the corresponding SPS PDSCH is received or activated, or it may assume that it is always a predetermined value (For example, enable).

In addition, the gNB100 may execute the downlink channel scheduling and HARQ control described above.

### (3)Operation of radio communication system

Next, the operation of radio communication system 10 will be described. Specifically, the operation related to the scheduling of the downlink channel and the HARQ feedback of the channel related to the MBS will be described.

Fig. 5 shows an example sequence of PDCCH (including DCI), PDSCH and HARQ feedback in the MBS. As shown in Fig. 5, HARQ feedback such as group-common PDSCH may be enabled/disabled. The term enable/disable may be replaced with another term such as on/off or start/end (stop).

For example, enable/disable of HARQ feedback can be achieved by a combination of RRC signaling and DCI field instructions, and a specific operation example of enable/disable of HARQ feedback will be described below.

It should be noted that adding a new field for indicating enable/disable of HARQ feedback is undesirable from the viewpoint of increasing the overhead of DCI. If, for example, DCI format 1_0 is used for scheduling MBS (multicast/broadcast), the payload size should be the same as that for unicast, and consideration should be given such as not increasing the number of dedicated fields as much as possible.

### (3.1) Operation Example 1

In this example, among the fields in the DCI format, the field pertaining to the HARQ feedback may be used to specify enable/disable of the HARQ feedback. The field pertaining to the HARQ feedback may be interpreted as a field that has some influence or is related to the HARQ feedback.

The enable/disable of the HARQ feedback may be specified for the reception of a specific transport block (TB) (TB allocated by DCI including enable/disable notifications for HARQ feedback, for example), or it may be applied to a TB other than the specific TB (For example, TB through SPS group-common PDSCH) and not for the specific TB. That is, after the notification of the enable/disable of the HARQ feedback has been received, it may operate according to the notified enable/disable until a predetermined condition is satisfied (for example, until the notification is received again).

The DCI format used may be 1_0 and may be 1_1 or 1_2. Alternatively, it may be another DCI format (For example, 1_3) defined for scheduling group-common PDSCH.

### (Example 1-1)

Specifically, enable/disable of HARQ feedback may be specified based on any of the following fields: Note that the field name and the number of bits are not limited thereto.

(i)TPC command for scheduled PUCCH: 2 bits (3GPP TS38.213 7.2.1)
(ii)PUCCH resource indicator: 3 bits (3GPP TS38.213 9.2.3)
(iii)PDSCH-to-HARQ_feedback timing indicator: 3 bits (3GPP TS38.213, chapter 9.2.3)

### (Example 1-2)

When using the PUCCH resource indicator (PRI), the UE200 may operate as follows: The UE200 may change the correspondence between the PRI and the PUCCH resource set once it is set by the higher layer (For example, RRC signaling) that the enable/disable of the HARQ feedback is specified by the DCI.

Fig. 6 shows an example of the correspondence between the PRI and the PUCCH resource set in operation example 1-2. The upper side of Fig. 6 shows an example of the correspondence between the PRI and the PUCCH resource set when the enable/disable of the HARQ feedback is not applied. The lower side of Fig. 6 shows an example (embodiment) of the correspondence between the PRI and the PUCCH resource set when the enable/disable of the HARQ feedback is applied.

Note that in the lower part of Fig. 6, PRI=000 corresponds to no HARQ feedback, but this is an example and not limited thereto. The value of which PRI means no HARQ feedback may be specified in the 3GPP specification or set by a higher layer. In this operation example, a field of PRI is used, but the same may apply to the case where other fields described above are used (hereinafter the same).

The PUCCH resource#0 on the upper side of Fig. 6 and the PUCCH resource#0 on the lower side of Fig. 6 may be the same or different. For example, the same PUCCH resource may be indicated on the upper and lower sides of Fig. 6 except for PRI=000, in which case, for example, the PUCCH resource#1 on the upper side of Fig. 6 and the PUCCH resource#0 on the lower side of Fig. 6 may be the same.

The UE200 may stop transmitting the HARQ feedback (ACK/NACK) sent by the PUCCH resource once the PRI indicates no HARQ feedback. Alternatively, it may not start the operation related to the HARQ feedback transmission. The UE200 may not transmit the HARQ-ACK of the unicast PDSCH that is supposed to be placed on the same PUCCH resource. Alternatively, the UE200 may not transmit the HARQ-ACK of the multicast PDSCH that is supposed to be on the same PUCCH resource. Alternatively, the UE200 may not transmit the HARQ-ACK only for the MBS PDSCH (May include group-common PDSCH and SPS group-common PDSCH) scheduled by the DCI for which no HARQ feedback is indicated.

### (Example 1-3)

The UE200 may dynamically switch between the correspondence between the conventional PRI and the PUCCH resource set shown in the upper part of Fig. 6 and the correspondence between the PRI and the PUCCH resource set when the enable/disable of the HARQ feedback shown in the lower part of Fig. 6 is not applied.

Fig. 7 is an explanatory diagram of the switching operation of the PUCCH resource set according to the operation example 1-3. The PUCCH resource set may be dynamically switched between the HARQ feedback at the reception of the MBS PDSCH and the HARQ feedback at the reception of the unicast PDSCH.

As shown in Fig. 7, based on the RNTI associated with the PDSCH, the UE200 may switch between a PUCCH resource set that includes no HARQ feedback (Example) and a PUCCH resource set that does not include no HARQ feedback (Conventional).

### (Example 1-3-1)

If PUCCH-Config (such as a PUCCH resource/resource set) is configured for HARQ feedback on the MBS PDSCH separately from unicast HARQ feedback, the UE200 may operate as follows:
▪The PUCCH resource set for HARQ feedback on the MBS PDSCH is configured in the example shown at the bottom of Fig. 6.

For HARQ-ACK transmission (HARQ-ACK transmission of PDSCH scheduled by DCI with CRC scrambled by G-RNTI) on the MBS PDSCH, the PUCCH resource may be determined according to the PUCCH resource set at the bottom of Fig. 6.

▪Whether the PUCCH resource set for HARQ feedback on the MBS PDSCH is conventional or exemplary is determined based on whether the DCI designation of enable/disable for HARQ feedback is set by a higher layer.

If the enable/disable of the HARQ feedback is specified by the DCI in the DCI by the higher layer, the PUCCH resource set of the embodiment (lower side of Fig. 6) may be set. In this case, the PUCCH resource may be determined according to the PUCCH resource set of the lower side of Fig. 6 for the HARQ-ACK transmission (HARQ-ACK transmission of PDSCH scheduled by DCI with CRC scrambled by G-RNTI) to the MBS PDSCH.

If the enable/disable of the HARQ feedback is not specified by the DCI in the DCI by the higher layer, the conventional PUCCH resource set (upper side of Fig. 6) may be set. In this case, the PUCCH resource may be determined according to the PUCCH resource set in the upper side of Fig. 6 for the HARQ-ACK transmission (HARQ-ACK transmission of PDSCH scheduled by DCI with CRC scrambled by G-RNTI) to the MBS PDSCH.

▪The PUCCH resource set for the HARQ-ACK to the unicast PDSCH may be set according to the correspondence (Fig. 6 Upper side, a correspondence example between PRI and PUCCH resource set different from that for MBS may be used.) between the PRI and the PUCCH resource set, which conventionally does not include no HARQ feedback.

For the HARQ-ACK transmission (HARQ-ACK transmission of PDSCH scheduled by DCI with CRC scrambled by other than G-RNTI) to the unicast PDSCH, the PUCCH resource may be determined according to the PUCCH resource set at the top of Fig. 6.

### (Example 1-3-2)

If PUCCH-Config (for example, PUCCH resource/resource set) is not configured for HARQ feedback on MBS PDSCH separately from unicast HARQ feedback, UE200 may operate as follows:
▪HARQ-ACK transmission (HARQ-ACK transmission of PDSCH scheduled by DCI with CRC scrambled by G-RNTI) to MBS PDSCH may be as follows:
   ▪When enable/disable of HARQ feedback is specified by DCI in DCI by a higher layer, the set PUCCH resource set is treated as an embodiment (Fig. 6, lower side), and the PUCCH resource set of the embodiment is used to determine the PUCCH resource.
   ▪When enable/disable of HARQ feedback is not specified by DCI in DCI by a higher layer, the set PUCCH resource set is treated as conventional (Fig. 6, upper side), and the conventional PUCCH resource set is used to determine the PUCCH resource.
▪HARQ-ACK transmission (HARQ-ACK transmission of PDSCH scheduled by DCI with CRC scrambled by other than G-RNTI) to unicast PDSCH determines the PUCCH resource using the set conventional PUCCH resource set (Fig. 6, upper side).

### (Example 1-4)

HARQ feedback enable/disable may be specified by combining at least two of the following fields shown in Example 1-1. Note that the field name and the number of bits are not limited thereto.

(i)TPC command for scheduled PUCCH: 2 bits (3GPP TS38.213 7.2.1)
(ii)PUCCH resource indicator: 3 bits (3GPP TS38.213 9.2.3)
(iii)PDSCH-to-HARQ_feedback timing indicator: 3 bits (3GPP TS38.213 9.2.3)

For example, if (ii) and (iii) are predetermined values (For example, both are 0(zero).), or if (i), (ii), and (iii) are predetermined values (For example, all 0(zero)), it may be interpreted that HARQ feedback disable is specified.

By combining the plurality of fields in this manner, the flexibility (certainty) of the instruction regarding the HARQ feedback can be increased compared to the operation example 1-1.

### (Example 1-5)

For example, in the case where disable of HARQ feedback is specified when (ii) and (iii) above are predetermined values (For example, both are 0(zero).), it is set by the higher layer that enable/disable of HARQ feedback is specified by DCI, and (iii) when "0" is notified by the PDSCH-to-HARQ_feedback timing indicator, the PUCCH resource set (Example, Fig. 6 Bottom) including no HARQ feedback (disabled) may be applied. And (ii) when "0" is notified by the PUCCH resource indicator, the UE200 may determine that disable of HARQ feedback is specified.

The UE200 may stop transmitting HARQ feedback (ACK/NACK) transmitted by the PUCCH resource when no HARQ feedback is indicated by the PRI. Alternatively, it may not start the operation related to HARQ feedback transmission. As in operation example 1-2, the UE200 may not transmit the HARQ-ACK of the unicast PDSCH that is supposed to be placed on the same PUCCH resource. Alternatively, the UE200 may not transmit the HARQ-ACK of the multicast PDSCH that is supposed to be placed on the same PUCCH resource. Alternatively, the UE200 may not transmit a HARQ-ACK for only the MBS PDSCH (May include group-common PDSCH and SPS group-common PDSCH) scheduled by the DCI with no HARQ feedback indicated.

### (Example 1-6)

If the switch between the PUCCH resource set containing no HARQ feedback (Example) and the PUCCH resource set not containing no HARQ feedback (Conventional) shown in Fig. 7 is performed dynamically, the UE200 may dynamically switch between the PUCCH resource set containing no HARQ feedback and the PUCCH resource set not containing no HARQ feedback, based on the RNTI associated with the PDSCH and (iii) the PDSCH-to-HARQ_feedback timing indicator field.

### (Example 1-6-1)

If PUCCH-Config (such as a PUCCH resource/resource set) is configured for HARQ feedback on the MBS PDSCH separately from unicast HARQ feedback, the UE200 may operate as follows:
▪Whether the PUCCH resource set for HARQ feedback on the MBS PDSCH is conventional or exemplary is determined based on whether the DCI designation of enable/disable for HARQ feedback is configured by a higher layer.

When enable/disable of HARQ feedback is specified by DCI in DCI by a higher layer, if the PDSCH-to-HARQ_feedback timing indicator field isa predetermined value (For example, all 0(zero)), the PUCCH resource set of the embodiment may be set. Otherwise, the conventional PUCCH resource set may be set.

If enable/disable of HARQ feedback is not specified by DCI in DCI by a higher layer, the conventional PUCCH resource set (Fig. 6, upper) may be set. In this case, for HARQ-ACK transmission (HARQ-ACK transmission of PDSCH scheduled by DCI with CRC scrambled by G-RNTI) to MBS PDSCH, the PUCCH resource may be determined according to the conventional PUCCH resource set (Fig. 6, upper).

▪The PUCCH resource set for HARQ-ACK to unicast PDSCH may be set according to the conventional PUCCH resource set (Fig. 6 Upper side, a correspondence example between PRI and PUCCH resource set different from that for MBS may be used.).

For HARQ-ACK transmission (HARQ-ACK transmission of PDSCH scheduled by DCI with CRC scrambled by other than G-RNTI) to unicast PDSCH, the PUCCH resource may be determined according to the conventional PUCCH resource set.

### (Example 1-6-2)

If PUCCH-Config (for example, PUCCH resource/resource set) is not configured for HARQ feedback on MBS PDSCH separately from unicast HARQ feedback, UE200 may operate as follows:
▪HARQ-ACK transmission (HARQ-ACK transmission of PDSCH scheduled by DCI with CRC scrambled by G-RNTI) to MBS PDSCH may be as follows:
   ▪When enable/disable of HARQ feedback is set by DCI at the higher layer, if the PDSCH-to-HARQ_feedback timing indicator field is a predetermined value (For example, all 0(zero)), the set PUCCH resource set is treated as an embodiment (Fig. 6, lower side), and the PUCCH resource set of the embodiment is used to determine the PUCCH resource. Otherwise, the set PUCCH resource set is treated as conventional, and the PUCCH resource set is used to determine the PUCCH resource.
   ▪If the enable/disable of HARQ feedback is specified by DCI in DCI but not by the higher layer, the set PUCCH resource set is treated as conventional, and the PUCCH resource set is used to determine the PUCCH resource.
   ▪The HARQ-ACK transmission (HARQ-ACK transmission of PDSCH scheduled by DCI with CRC scrambled by other than G-RNTI) to the unicast PDSCH determines the PUCCH resource using the configured conventional PUCCH resource set.

### (Example 1-7)

The following configurations may be made using RRC signaling. For example, when disable of HARQ feedback is set by RRC signaling, the UE200 may assume that enable/disable of HARQ feedback by DCI is not always indicated.

On the other hand, when enable of HARQ feedback is set, the UE200 may assume that enable/disable of HARQ feedback by DCI is always indicated.

When enable of HARQ feedback is set, the method of indicating enable/disable of HARQ feedback by DCI is not particularly limited, and the method of specifying by the field of DCI described above may be different. The size of the field in DCI format or DCI may be the same or different between the case of disabling HARQ feedback and the case of enabling HARQ feedback.

### (Example 1-8)

HARQ feedback enable/disable may be set for each RNTI. For example, a plurality of G-RNTIs may be set, and HARQ feedback enable/disable may be set for each. For example, if two G-RNTIs are set, and G-RNTI-1 and G-RNTI-2, respectively, HARQ feedback may be set as enable for G-RNTI-1 and HARQ feedback may be set as disable for G-RNTI-2. The UE200 may determine whether to perform HARQ feedback based on whether the RNTI associated with the received PDSCH is G-RNTI-1 or G-RNTI-2. The RNTI is not particularly limited and may be C-RNTI or G-RNTI.

### (Example 1-9)

The method of indicating enable/disable of HARQ feedback by DCI may be switched by signaling of RRC.

For example, the instruction method of operation example 1-1 and operation example 1-4 may be switched by signaling of the RRC.

### (3.2) Operation Example 2

In this operation example, the enable/disable of the HARQ feedback may be specified based on at least one of the following signals and/or information pertaining to the reception of the DCI. Such a specification may be an implicit instruction rather than an explicit one.

### (Example 2-1)

The UE200 may assume enable/disable of HARQ feedback based on the DCI format. For example, the UE200 may operate as follows:
▪Enable/disable for HARQ feedback in different and separate DCI formats

The UE200 may perform HARQ feedback for MBS PDSCH scheduled by a given DCI format and may not perform HARQ feedback for MBS PDSCH scheduled by a DCI format other than the given DCI format.

▪The format for enabling HARQ feedback may include at least any of the fields (i) through (iii) shown in Example 1-1 and the like.
▪The format for disabling HARQ feedback may not include the fields (i) through (iii) shown in Example 1-1 and the like.
▪The payload size or format indicator may distinguish the above DCI formats.

### (Example 2-2)

The UE200 may assume enable/disable of the HARQ feedback based on the RNTI that scrambles the CRC of the DCI. For example, the UE200 may operate as follows:
▪G1-RNTI (One of the G-RNTIs, tentative name) is defined and used to schedule group-common PDSCH with HARQ for which HARQ feedback is performed.
▪G2-RNTI (One of the G-RNTIs, tentative name) is defined and used to schedule group-common PDSCH without HARQ for which HARQ feedback is not performed.

### (Example 2-3)

The UE200 may assume enable/disable of HARQ feedback based on the CORESET and/or search space used to transmit the DCI.

### (Example 2-4)

The UE200 may assume enable/disable of HARQ feedback based on the PDSCH resource (time/frequency/code/space) notified by the DCI.

### (3.3) Operation Example 3

In this example, in the data distribution (MBS) for a plurality of UE200 s, the activation or inactivation of the feedback of the HARQ in the downlink channel may be specified based on the priority field included in the DCI.

Specifically, among the fields in the DCI (or DCI format) for scheduling the MBS PDSCH, the HARQ feedback = {enable/disable} corresponding to the MBS PDSCH reception may be specified based on the priority field.

(Example 3-0): The priority field may be a priority indicator field (tentative name may be used) or another field related to the priority instruction. The Priority indicator field may be a single bit to indicate high or low priority, or a plurality of bits to indicate priority in more detail, as long as it can indicate high priority for the HARQ. The priority for the HARQ may, for example, indicate the priority of the HARQ itself or the priority of the HARQ feedback.

The priority indicated by the Priority indicator field or another field pertaining to the Priority indication may be the priority of the HARQ feedback or PDCCH corresponding to the scaled PDSCH (scheduled PDSCH).

On the basis of such priority, the HARQ feedback = {enable/disable} corresponding to the MBS PDSCH reception may be specified by at least one of the methods of Example 3-1-3-4.

### (Example 3-1)

If the priority is high (For example, priority indicator = 1), HARQ feedback enable is set.

### (Example 3-2)

If the priority is low (For example, priority indicator = 0), HARQ feedback disable is set.

Fig. 8 shows an example of correspondence between the priority indicator and HARQ feedback for operation example 3-1 and operation example 3-2. As shown in Fig. 8, when priority indicator = 1, HARQ feedback enable may be used, and when priority indicator = 0, HARQ feedback disable may be used.

### (Example 3-3)

Whether HARQ feedback is enabled or disabled is set for each priority indicator value (which can be 3 or more values).

### (Example 3-4)

For each value of the priority indicator (For at least one of 0,1), it is set whether the HARQ feedback enable/disable instruction is performed by the DCI.

In this case, the instruction may be performed according to either operation example 1 or operation example 2.

In addition, if the DCI/DCI format does not include the Priority indicator field, the HARQ feedback = {enable/disable} corresponding to the MBS PDSCH reception may be specified by at least one method of operation example 3-5 or 3-6.

### (Example 3-5)

The enable/disable of HARQ feedback set by the RRC parameter is applied. If the enable/disable is not set by the RRC parameter, a predetermined value (For example, enable or disable) may be assumed.

### (Example 3-6)

Enable/disable is applied based on the priority of HARQ feedback/PUCCH set by the RRC parameter. If the priority is not set even by the RRC parameter, a predetermined value (For example, enable or disable) may be assumed.

According to this operation example, the UE200 can determine the presence or absence of appropriate HARQ feedback according to the priority.

The enable/disable may be applied based on the priority of HARQ feedback/PUCCH set by the RRC parameter, not only when the priority indicator field is not included in the DCI/DCI format. In this case, also when the enable/disable is not set by the RRC parameter, a predetermined value (For example, enable or disable) may be assumed.

### (3.4) Operation Example 4

In this operation example, when semi-persistent scheduling (SPS) is applied to the downlink data channel (PDSCH), it may be assumed that the instruction to enable or disable the feedback of HARQ by the DCI via the downlink control channel (group-common PDCCH) common to the terminal group is applied to the reception of the PDSCH immediately after the DCI and the reception with the subsequent PDSCH.

Fig. 9 shows an example of the correspondence relationship between the DCI and the PDSCH in operation example 4. In the case of Multicast SPS PDSCH reception, the HARQ feedback enable/disable instruction in the activation DCI of the group-common PDCCH may be applied to the PDSCH reception immediately after the activation DCI of the group-common PDCCH and to the subsequent SPS PDSCH reception.

### (Example 4-1)

The instruction by the activation DCI of the group-common PDCCH may be made in accordance with any of the examples 1-3.

### (Example 4-2)

This indication by the activation DCI of the group-common PDCCH may be made using fields of the DCI that are not used for special fields of activation.

### (Example 4-3)

When multicast SPS PDSCH activation is performed by the UE-specific PDCCH DCI, the HARQ feedback enable/disable for subsequent SPS PDSCH reception may be indicated in the UE-specific PDCCH activation DCI.

The indication may be made in accordance with any of the operational examples 1-3. In addition, the PDSCH reception immediately after the activation DCI of the UE-specific PDCCH may be HARQ feedback enable or may follow the HARQ feedback enable/disable indication for SPS PDSCH reception.

The multicast SPS PDSCH HARQ enable/disable indication may be performed only by the activation DCI of the group-common PDCCH or by any of the activation DCI of the group-common/UE-specific PDCCH.

In addition, "immediately following PDSCH reception" may mean SPS PDSCH reception with corresponding PDCCH, and "subsequent SPS PDSCH reception" may mean SPS PDSCH reception without corresponding PDCCH.

According to this operation example, a configuration in which HARQ feedback is requested for periodic transmission with high reliability and no HARQ feedback is requested for transmission with low reliability can be easily set. In addition, a common configuration can be made for all SPS receptions to simplify the implementation of UE200.

### (3.5) Operation Example 5

In this example, when semi-persistent scheduling (SPS) is applied to the downlink data channel (PDSCH), it may be assumed that the instruction to enable or disable feedback of HARQ by DCI via the downlink control channel (group-common PDCCH) common to the terminal group is applied to the reception of subsequent PDSCH except for the PDSCH immediately after the DCI.

Fig. 10 shows an example of the correspondence relationship between DCI and PDSCH according to the example 5. In the case of Multicast SPS PDSCH reception, the HARQ feedback enable/disable instruction in the activation DCI of the group-common PDCCH is applied only to the subsequent SPS PDSCH reception, and the HARQ feedback may be set to a predetermined value (For example, enable) for the PDSCH reception immediately after the activation DCI of the group-common PDCCH.

### (Example 5-1)

The instruction by the activation DCI of the group-common PDCCH may be made in accordance with any of the examples 1-3.

### (Example 5-2)

This indication by the activation DCI of the group-common PDCCH may be made using fields of the DCI that are not used for special fields of activation.

### (Example 5-3)

When multicast SPS PDSCH activation is performed by the UE-specific PDCCH DCI, the HARQ feedback enable/disable for subsequent SPS PDSCH reception may be indicated in the UE-specific PDCCH activation DCI.

The indication may be made in accordance with any of the operational examples 1-3. The PDSCH reception immediately after the activation DCI of the UE-specific PDCCH may be HARQ feedback enable or may follow the enable/disable instruction of HARQ feedback for SPS PDSCH reception.

The HARQ enable/disable instruction of the multicast SPS PDSCH may be performed only by the activation DCI of the group-common PDCCH or by any of the activation DCI of the group-common/UE-specific PDCCH.

In addition, "immediately following PDSCH reception" may mean SPS PDSCH reception with corresponding PDCCH, and "subsequent SPS PDSCH reception" may mean SPS PDSCH reception without corresponding PDCCH.

According to this operation example, since the gNB100 can surely grasp the success or failure of activation of PDSCH, communication quality can be improved.

### (3.6) Operation Example 6

In this operation example, when a downlink data channel (PDSCH) to which semi-persistent scheduling (SPS) is applied is released, whether the feedback of the HARQ applied at the time of the release of the PDSCH is valid or invalid may be determined based on the activation or invalidation of the feedback of the HARQ applied at the time of the reception of the PDSCH.

Specifically, whether the HARQ feedback for the release (deactivation) of Multicast SPS PDSCH is enable or disable may be determined by any of the following operational examples.

### (Example 6-1)

Enable/disable of HARQ feedback for deactivation is performed according to any of the operational examples 1~5.

### (Example 6-2)

This is the same as the enable/disable of HARQ feedback for Multicast SPS PDSCH release (deactivation) and corresponding SPS PDSCH reception.

### (Example 6-3)

It must be a predetermined value (For example, enable).

### (Example 6-4)

This is the same as the release (deactivation) of Multicast SPS PDSCH and the enable/disable of HARQ feedback for the corresponding SPS PDSCH activation.

Note that the DCI may be a group-common release (deactivation) DCI or a UE-specific release (deactivation) DCI.

According to this operation example, the HARQ feedback operation for the release (deactivation) of Multicast SPS PDSCH can be clearly instructed to the UE200. In addition, if it is always enabled, the gNB100 can surely grasp the success or failure of the activation of PDSCH, thereby improving the communication quality. On the other hand, if enable/disable is determined by the condition, appropriate feedback according to the situation can be realized.

### (3.7) Operation Example 7

In this operation example, ACK/NACK feedback or NACK-only feedback may be specified together with the specification of HARQ feedback enable/disable.

Specifically, this specification may be made according to any of the operation examples 1~6.

### (3.8) Modifications

The above operation examples may be combined and applied as long as there is no conflict. Further, as described above, a term indicating a time region such as a slot may be replaced with a term indicating another time region such as a subslot.

Although the above-described operation example was related to an MBS for simultaneous transmission (delivery) to a plurality of UEs, the UEs subject to the MBS may not always be a plurality, and may include cases where a plurality of specific or unspecified UEs are substantially one if an operation according to the MBS is performed, such as using a group-common PDSCH, and may not be a plurality.

### (4)Operational effects

According to the above-described embodiment, the following operation effects can be obtained. Specifically, according to the UE200 related to the operation examples 1 to 7, the HARQ feedback for the downlink channel related to the MBS, specifically the group-common PDSCH, can be efficiently enabled/disabled (enable/disable).

Thus, the UE200 can quickly and reliably recognize when the HARQ feedback is enabled and/or disabled.

In this embodiment, the UE200 may enable/disable at least one of the HARQ feedback in the downlink channel based on a specific field included in the DCI, e.g., the PUCCH resource indicator (PRI) field. Thus, the HARQ feedback enable/disable can be reliably achieved using the existing DCI.

In this embodiment, the UE200 may recognize that the enable/disable of the HARQ feedback by the DCI is specified by the signaling of the higher layer (For example, RRC) or the like. Therefore, the enable/disable of the HARQ feedback can be realized flexibly and surely.

In this embodiment, the UE200 may perform at least one of the enable/disable of the HARQ feedback in the downlink channel based on at least one of the format, identification information, resource or search space associated with the DCI. Thus, the enable/disable of the HARQ feedback can be achieved more flexibly and reliably.

In the present embodiment, in the data distribution (MBS) for the plurality of UE200 s, the enable/disable of the feedback of the HARQ in the downlink channel may be specified based on the priority field included in the DCI. Thus, the UE200 can determine the presence/absence of the appropriate HARQ feedback according to the priority.

In this embodiment, when semi-persistent scheduling (SPS) is applied to the downlink data channel (PDSCH), it may be assumed that the instruction to enable or disable feedback of HARQ by the DCI through the downlink control channel (group-common PDCCH) common to the terminal group is applied to the reception of the PDSCH immediately after the DCI and the reception with the subsequent PDSCH. Therefore, it is easy to set up a configuration in which HARQ feedback is requested for periodic transmission with high reliability and HARQ feedback is not requested for transmission with low reliability.

In this embodiment, when semi-persistent scheduling (SPS) is applied to the downlink data channel (PDSCH), it may be assumed that an instruction to enable or disable feedback of HARQ by DCI via the downlink control channel (group-common PDCCH) common to the terminal group is applied to the reception of subsequent PDSCH except for the PDSCH immediately after the DCI. Therefore, since the gNB100 can surely grasp the success or failure of activation of the PDSCH, communication quality can be improved.

In this embodiment, when releasing a downlink data channel (PDSCH) to which semi-persistent scheduling (SPS) is applied, it may be determined whether the feedback of the HARQ applied at the time of release of the PDSCH is effective or ineffective based on the activation or ineffectiveness of the feedback of the HARQ applied at the time of reception of the PDSCH. Therefore, the HARQ feedback operation for the release (deactivation) of the Multicast SPS PDSCH can be clearly instructed to the UE200.

### (5)Other Embodiments

Although the embodiments have been described above, they are not limited to the description of the embodiments, and it is obvious to those skilled in the art that various modifications and improvements can be made.

For example, in the embodiments described above, the names PDCCH and PDSCH were used as the downlink channels, but the downlink control channels or downlink data channels (which may be shared channels) may be called by different names.

In the descriptions described above, setting (configure), activating (activate), updating (update), indicating (indicate), enabling (enable), specifying (specify), and selecting (select) may be replaced with each other. Similarly, link, associate, correspond, and map may be replaced with each other, and allocate, assign, monitor, and map may be replaced with each other.

In addition, specific, dedicated, UE-specific, and UE-specific may be replaced with each other. Similarly, common, shared, group-common, UE-common, and UE-shared may be replaced with each other.

Further, the block configuration diagram (Fig. 4) used for the description of the above-described embodiment shows blocks of functional units. Those functional blocks (structural components) can be realized by a desired combination of at least one of hardware and software. Means for realizing each functional block is not particularly limited. That is, each functional block may be realized by one device combined physically or logically. Alternatively, two or more devices separated physically or logically may be directly or indirectly connected (for example, wired, or wireless) to each other, and each functional block may be realized by these plural devices. The functional blocks may be realized by combining software with the one device or the plural devices mentioned above.

Functions include judging, deciding, determining, calculating, computing, processing, deriving, investigating, searching, confirming, receiving, transmitting, outputting, accessing, resolving, selecting, choosing, establishing, comparing, assuming, expecting, considering, broadcasting, notifying, communicating, forwarding, configuring, reconfiguring, allocating (mapping), assigning, and the like. However, the functions are not limited thereto. For example, a functional block (configuration part) that functions transmission is called a transmission unit (transmitting unit) or a transmitter. As described above, the method of realization of both is not particularly limited.

Furthermore, the gNB100 and UE200 described above may function as computers for processing the radio communication method of the present disclosure. Fig. 11 is a diagram showing an example of a hardware configuration of the device. As shown in Fig. 11, the device may be configured as a computer device including a processor 1001, a memory 1002, a storage 1003, a communication device 1004, an input device 1005, an output device 1006 and a bus 1007.

Furthermore, in the following explanation, the term "device" can be replaced with a circuit, device, unit, and the like. Hardware configuration of the device can be constituted by including one or plurality of the devices shown in the figure, or can be constituted by without including a part of the devices.

Each functional block of the device (see Fig. 4) is implemented by any hardware element or combination of hardware elements of the computer device.

Moreover, the processor 1001 performs computing by loading a predetermined software (computer program) on hardware such as the processor 1001 and the memory 1002, and realizes various functions of the reference device by controlling communication via the communication device 1004, and controlling reading and/or writing of data on the memory 1002 and the storage 1003.

Processor 1001, for example, operates an operating system to control the entire computer. Processor 1001 may be configured with a central processing unit (CPU), including interfaces to peripheral devices, controls, computing devices, registers, etc.

Moreover, the processor 1001 reads a computer program (program code), a software module, data, and the like from the storage 1003 and/or the communication device 1004 into the memory 1002, and executes various processes according to the data. As the computer program, a computer program that is capable of executing on the computer at least a part of the operation explained in the above embodiments is used. Alternatively, various processes explained above can be executed by one processor 1001 or can be executed simultaneously or sequentially by two or more processors 1001. The processor 1001 can be implemented by using one or more chips. Alternatively, the computer program can be transmitted from a network via a telecommunication line.

The memory 1002 is a computer readable recording medium and is configured, for example, with at least one of Read Only Memory (ROM), Erasable Programmable ROM (EPROM), Electrically Erasable Programmable ROM (EEPROM), Random Access Memory (RAM), and the like. The memory 1002 may be referred to as a register, cache, main memory (main storage device), or the like. The memory 1002 may store a program (program code), a software module, or the like capable of executing a method according to an embodiment of the present disclosure.

The storage 1003 is a computer readable recording medium. Examples of the storage 1003 include an optical disk such as Compact Disc ROM (CD-ROM), a hard disk drive, a flexible disk, a magnetooptical disk (for example, a compact disk, a digital versatile disk, Blu-ray (Registered Trademark) disk), a smart card, a flash memory (for example, a card, a stick, a key drive), a floppy (Registered Trademark) disk, a magnetic strip, and the like. The storage 1003 can be called an auxiliary storage device. The recording medium can be, for example, a database including the memory 1002 and/or the storage 1003, a server, or other appropriate medium.

The communication device 1004 is hardware (transmission/reception device) capable of performing communication between computers via a wired and/or wireless network. The communication device 1004 is also called, for example, a network device, a network controller, a network card, a communication module, and the like.

The communication device 1004 includes a high-frequency switch, a duplexer, a filter, a frequency synthesizer, and the like in order to realize, for example, at least one of Frequency Division Duplex (FDD) and Time Division Duplex (TDD).

The input device 1005 is an input device (for example, a keyboard, a mouse, a microphone, a switch, a button, a sensor, and the like) that accepts input from the outside. The output device 1006 is an output device (for example, a display, a speaker, an LED lamp, and the like) that outputs data to the outside. Note that, the input device 1005 and the output device 1006 may be integrated (for example, a touch screen).

Each device, such as the processor 1001 and the memory 1002, is connected by a bus 1007 for communicating information. The bus 1007 may be configured using a single bus or a different bus for each device.

Further, the device is configured to include hardware such as a microprocessor, a digital signal processor (Digital Signal Processor: DSP), Application Specific Integrated Circuit (ASIC), Programmable Logic Device (PLD), and Field Programmable Gate Array (FPGA). Some or all of these functional blocks may be realized by the hardware. For example, the processor 1001 may be implemented by using at least one of these hardware.

Further, the notification of information is not limited to the aspects/embodiments described in the present disclosure and may be carried out using other methods. For example, the notification of information may be performed by physical layer signaling (e.g., Downlink Control Information (DCI), Uplink Control Information (UCI), higher layer signaling (e.g., RRC signaling, Medium Access Control (MAC) signaling, Notification Information (Master Information Block (MIB), System Information Block (SIB)), other signals or combinations thereof. RRC signaling may also be referred to as RRC messages, e.g., RRC Connection Setup messages, RRC Connection Reconfiguration messages, etc.

Each of the above aspects/embodiments can be applied to at least one of Long Term Evolution (LTE), LTE-Advanced (LTE-A), SUPER 3G, IMT-Advanced, 4th generation mobile communication system (4G), 5th generation mobile communication system (5G), Future Radio Access (FRA), New Radio (NR), W-CDMA (Registered Trademark), GSM (Registered Trademark), CDMA2000, Ultra Mobile Broadband (UMB), IEEE 802.11 (Wi-Fi (Registered Trademark)), IEEE 802.16 (WiMAX (Registered Trademark)), IEEE 802.20, Ultra-WideBand (UWB), Bluetooth (Registered Trademark), a system using any other appropriate system, and a next-generation system that is expanded based on these. Further, a plurality of systems may be combined (for example, a combination of at least one of the LTE and the LTE-A with the 5G).

The processing steps, sequences, flowcharts, etc., of each of the embodiments/embodiments described in the present disclosure may be reordered as long as there is no conflict. For example, the method described in the present disclosure presents elements of various steps using an exemplary sequence and is not limited to the particular sequence presented.

The specific operation that is performed by the base station in the present disclosure may be performed by its upper node in some cases. In a network constituted by one or more network nodes having a base station, the various operations performed for communication with the terminal may be performed by at least one of the base station and other network nodes other than the base station (for example, MME, S-GW, and the like may be considered, but not limited thereto). In the above, an example in which there is one network node other than the base station is explained; however, a combination of a plurality of other network nodes (for example, MME and S-GW) may be used.

Information, signals (information and the like) can be output from a higher layer (or lower layer) to a lower layer (or higher layer). It may be input and output via a plurality of network nodes.

The input/output information can be stored in a specific location (for example, a memory) or can be managed in a management table. The information to be input/output can be overwritten, updated, or added. The information can be deleted after outputting. The inputted information can be transmitted to another device.

The determination may be made by a value (0 or 1) represented by one bit or by Boolean value (Boolean: true or false), or by comparison of numerical values (for example, comparison with a predetermined value).

Each of the embodiments/embodiments described in the present disclosure may be used alone, in combination, or alternatively with execution. In addition, notification of predetermined information (for example, notification of "being X") is not limited to being performed explicitly, it may be performed implicitly (for example, without notifying the predetermined information).

Instead of being referred to as software, firmware, middleware, microcode, hardware description language, or some other name, software should be interpreted broadly to mean instruction, instruction set, code, code segment, program code, program, subprogram, software module, application, software application, software package, routine, subroutine, object, executable file, execution thread, procedure, function, and the like.

Further, software, instruction, information, and the like may be transmitted and received via a transmission medium. For example, when a software is transmitted from a website, a server, or some other remote source by using at least one of a wired technology (coaxial cable, fiber optic cable, twisted pair, Digital Subscriber Line (DSL), or the like) and a wireless technology (infrared light, microwave, or the like), then at least one of these wired and wireless technologies is included within the definition of the transmission medium.

Information, signals, or the like mentioned above may be represented by using any of a variety of different technologies. For example, data, instruction, command, information, signal, bit, symbol, chip, or the like that may be mentioned throughout the above description may be represented by voltage, current, electromagnetic wave, magnetic field or magnetic particle, optical field or photons, or a desired combination thereof.

It should be noted that the terms described in this disclosure and terms necessary for understanding the present disclosure may be replaced by terms having the same or similar meanings. For example, at least one of the channels and symbols may be a signal (signaling). The signal may also be a message. Also, a signal may be a message. Further, a component carrier (Component Carrier: CC) may be referred to as a carrier frequency, a cell, a frequency carrier, or the like.

The terms "system" and "network" used in the present disclosure can be used interchangeably.

Furthermore, the information, the parameter, and the like explained in the present disclosure can be represented by an absolute value, can be expressed as a relative value from a predetermined value, or can be represented by corresponding other information. For example, the radio resource can be indicated by an index.

The name used for the above parameter is not a restrictive name in any respect. In addition, formulas and the like using these parameters may be different from those explicitly disclosed in the present disclosure. Because the various channels (for example, PUCCH, PDCCH, or the like) and information element can be identified by any suitable name, the various names assigned to these various channels and information elements shall not be restricted in any way.

In the present disclosure, it is assumed that "base station (Base Station: BS)," "radio base station," "fixed station," "NodeB," "eNodeB (eNB)," "gNodeB (gNB)," "access point," "transmission point," "reception point," "transmission/reception point," "cell," "sector," "cell group," "carrier," "component carrier," and the like can be used interchangeably. The base station may also be referred to with the terms such as a macro cell, a small cell, a femtocell, or a pico cell.

The base station can accommodate one or more (for example, three) cells (also called sectors). In a configuration in which the base station accommodates a plurality of cells, the entire coverage area of the base station can be divided into a plurality of smaller areas. In each such a smaller area, communication service can be provided by a base station subsystem (for example, a small base station for indoor use (Remote Radio Head: RRH)).

The term "cell" or "sector" refers to a part or all of the coverage area of a base station and/or a base station subsystem that performs communication service in this coverage.

In the present disclosure, the terms "mobile station (Mobile Station: MS)," "user terminal," "user equipment (User Equipment: UE)," "terminal" and the like can be used interchangeably.

The mobile station is called by the persons skilled in the art as a subscriber station, a mobile unit, a subscriber unit, a radio unit, a remote unit, a mobile device, a radio device, a radio communication device, a remote device, a mobile subscriber station, an access terminal, a mobile terminal, a radio terminal, a remote terminal, a handset, a user agent, a mobile client, a client, or with some other suitable term.

At least one of a base station and a mobile station may be called a transmitting device, a receiving device, a communication device, or the like. Note that, at least one of a base station and a mobile station may be a device mounted on a moving body, a moving body itself, or the like. The mobile may be a vehicle (For example, cars, planes, etc.), an unmanned mobile (For example, drones, self-driving cars,), or a robot (manned or unmanned). At least one of a base station and a mobile station can be a device that does not necessarily move during the communication operation. For example, at least one of a base station and a mobile station may be an Internet of Things (IoT) device such as a sensor.

The base station in the present disclosure may be read as a mobile station (user terminal, hereinafter the same). For example, each aspect/embodiment of the present disclosure may be applied to a configuration in which communication between a base station and a mobile station is replaced by communication between a plurality of mobile stations (For example, it may be called device-to-device (D2D), vehicle-to-everything (V2X), etc.). In this case, the mobile station may have the function of the base station. Further, words such as "up" and "down" may be replaced with words corresponding to communication between terminals (For example, "side"). For example, up channels, down channels, etc. may be replaced with side channels (or side links).

Similarly, mobile stations in the present disclosure may be replaced with base stations. In this case, the base station may have the function of the mobile station. A radio frame may be composed of one or more frames in the time domain. Each frame or frames in the time domain may be referred to as a subframe. A subframe may be further configured by one or more slots in the time domain. Subframes may be of a fixed time length (For example, 1 ms) independent of numerology.

Numerology may be a communication parameter applied to at least one of transmission and reception of a certain signal or channel. The numerology can include one among, for example, subcarrier spacing (SubCarrier Spacing: SCS), bandwidth, symbol length, cyclic prefix length, transmission time interval (Transmission Time Interval: TTI), number of symbols per TTI, radio frame configuration, a specific filtering process performed by a transceiver in the frequency domain, a specific windowing process performed by a transceiver in the time domain, and the like.

The slot may be configured with one or a plurality of symbols (Orthogonal Frequency Division Multiplexing (OFDM)) symbols, Single Carrier Frequency Division Multiple Access (SC-FDMA) symbols, etc.) in the time domain. A slot may be a unit of time based on the numerology.

A slot may include a plurality of minislots. Each minislot may be configured with one or more symbols in the time domain. A minislot may also be called a subslot. A minislot may be composed of fewer symbols than slots. PDSCH (or PUSCH) transmitted in units of time greater than the minislot may be referred to as PDSCH (or PUSCH) mapping type A. PDSCH (or PUSCH) transmitted using a minislot may be referred to as PDSCH (or PUSCH) mapping type B.

Each of the radio frame, subframe, slot, minislot, and symbol represents a time unit for transmitting a signal. Different names may be used for the radio frame, subframe, slot, minislot, and symbol.

For example, one subframe may be called a transmission time interval (TTI), a plurality of consecutive subframes may be called TTI, and one slot or one minislot may be called TTI. That is, at least one of the subframes and TTI may be a subframe in an existing LTE (1 ms), a period shorter than 1 ms (For example, 1-13 symbols), or a period longer than 1 ms. Note that, a unit representing TTI may be called a slot, a minislot, or the like instead of a subframe.

Here, TTI refers to the minimum time unit of scheduling in radio communication, for example. Here, TTI refers to the minimum time unit of scheduling in radio communication, for example. For example, in the LTE system, the base station performs scheduling for allocating radio resources (frequency bandwidth, transmission power, etc. that can be used in each user terminal) to each user terminal in units of TTI. The definition of TTI is not limited to this.

The TTI may be a transmission time unit such as a channel-encoded data packet (transport block), a code block, or a code word, or may be a processing unit such as scheduling or link adaptation. When the TTI is given, the time interval (For example, the number of symbols) in which the transport block lock, code word, etc. are actually mapped may be shorter than the TTI.

When one slot or one minislot is called TTI, one or more TTIs (that is, one or more slots or one or more minislots) may be the minimum scheduling unit. The number of slots (number of minislots) constituting the minimum time unit of the scheduling may be controlled.

TTI having a time length of 1 ms may be referred to as an ordinary TTI (TTI in LTE Rel. 8-12), a normal TTI, a long TTI, a normal subframe, a normal subframe, a long subframe, a slot, and the like. TTI shorter than the ordinary TTI may be referred to as a shortened TTI, a short TTI, a partial TTI (partial or fractional TTI), a shortened subframe, a short subframe, a minislot, a subslot, a slot, and the like.

In addition, a long TTI (for example, ordinary TTI, subframe, etc.) may be read as TTI having a time length exceeding 1 ms, and a short TTI (for example, shortened TTI) may be read as TTI having TTI length of less than the TTI length of the long TTI but TTI length of 1 ms or more.

The resource block (RB) is a resource allocation unit in the time domain and frequency domain, and may include one or a plurality of continuous subcarriers in the frequency domain. The number of subcarriers included in RB may be, for example, twelve, and the same regardless of the topology. The number of subcarriers included in the RB may be determined based on the neurology.

Also, the time domain of RB may include one or a plurality of symbols, and may have a length of 1 slot, 1 minislot, 1 subframe, or 1 TTI. Each TTI, subframe, etc. may be composed of one or more resource blocks.

Note that, one or more RBs may be called a physical resource block (Physical RB: PRB), a subcarrier group (Sub-Carrier Group: SCG), a resource element group (Resource Element Group: REG), PRB pair, RB pair, etc.

A resource block may be configured by one or a plurality of resource elements (Resource Element: RE). For example, one RE may be a radio resource area of one subcarrier and one symbol.

A bandwidth part (BWP) (which may be called a partial bandwidth, etc.) may represent a subset of contiguous common resource blocks (RBs) for a certain neurology in a certain carrier. Here, the common RB may be specified by an index of the RB relative to the common reference point of the carrier. PRB may be defined in BWP and numbered within that BWP.

BWP may include UL BWP (UL BWP) and DL BWP (DL BWP). One or a plurality of BWPs may be configured in one carrier for the UE.

At least one of the configured BWPs may be active, and the UE may not expect to send and receive certain signals/channels outside the active BWP. Note that "cell," "carrier," and the like in this disclosure may be read as "BWP."

The above-described structures such as a radio frame, subframe, slot, minislot, and symbol are merely examples. For example, the number of subframes included in a radio frame, the number of slots per subframe or radio frame, the number of minislots included in a slot, the number of symbols and RBs included in a slot or minislot, the subcarriers included in RBs, and the number of symbols included in TTI, a symbol length, the cyclic prefix (CP) length, and the like can be changed in various manner.

The terms "connected," "coupled," or any variations thereof, mean any direct or indirect connection or coupling between two or more elements. Also, one or more intermediate elements may be present between two elements that are "connected" or "coupled" to each other. The coupling or connection between the elements may be physical, logical, or a combination thereof. For example, "connection" may be read as "access." In the present disclosure, two elements can be "connected" or "coupled" to each other by using one or more wires, cables, printed electrical connections, and as some non-limiting and non-exhaustive examples, by using electromagnetic energy having wavelengths in the microwave region and light (both visible and invisible) regions, and the like.

The reference signal may be abbreviated as Reference Signal (RS) and may be called pilot (Pilot) according to applicable standards.

As used in the present disclosure, the phrase "based on" does not mean "based only on" unless explicitly stated otherwise. In other words, the phrase "based on" means both "based only on" and "based at least on."

The "means" in the configuration of each apparatus may be replaced with "unit," "circuit," "device," and the like.

Any reference to an element using a designation such as "first," "second," and the like used in the present disclosure generally does not limit the amount or order of those elements. Such designations can be used in the present disclosure as a convenient way to distinguish between two or more elements. Thus, the reference to the first and second elements does not imply that only two elements can be adopted, or that the first element must precede the second element in some or the other manner.

In the present disclosure, the used terms "include," "including," and variants thereof are intended to be inclusive in a manner similar to the term "comprising." Furthermore, the term "or" used in the present disclosure is intended not to be an exclusive disjunction.

Throughout this disclosure, for example, during translation, if articles such as a, an, and the in English are added, in this disclosure, these articles shall include plurality of nouns following these articles.

As used in this disclosure, the terms "determining," "judging" and "deciding" may encompass a wide variety of actions. "Judgment" and "decision" includes judging or deciding by, for example, judging, calculating, computing, processing, deriving, investigating, looking up, search, inquiry (e.g., searching in a table, database, or other data structure), ascertaining, and the like. In addition, "judgment" and "decision" can include judging or deciding by receiving (for example, receiving information), transmitting (for example, transmitting information), input (input), output (output), and access (accessing) (e.g., accessing data in a memory). In addition, "judgement" and "decision" can include judging or deciding by resolving, selecting, choosing, establishing, and comparing. In other words, "judgment" and "decision" may include regarding some action as "judgment" and "decision." Moreover, "judgment (decision)" may be read as "assuming," "expecting," "considering," and the like.

In the present disclosure, the term "A and B are different" may mean "A and B are different from each other." It should be noted that the term may mean "A and B are each different from C." Terms such as "leave," "coupled," or the like may also be interpreted in the same manner as "different."

Although the present disclosure has been described in detail above, it will be obvious to those skilled in the art that the present disclosure is not limited to the embodiments described in this disclosure. The present disclosure can be implemented as modifications and variations without departing from the spirit and scope of the present disclosure as defined by the claims. Therefore, the description of the present disclosure is for the purpose of illustration, and does not have any restrictive meaning to the present disclosure.

### [Explanation of Reference Numerals]

10 radio communication system
20 NG-RAN
100 gNB
200 UE
210 radio signal transmission and reception unit
220 amplifier unit
230 modulation and demodulation unit
240 control signal and reference signal processing unit
250 encoding/decoding unit
260 data transmission and reception unit
270 control unit
1001 processor
1002 memory
1003 storage
1004 communication device
1005 input device
1006 output device
1007 bus

## Claims

1. A terminal comprising:
a reception unit that receives downlink control information; and
a control unit that performs at least one of enabling or disabling feedback of an automatic retransmission request in a downlink channel based on a priority field included in the downlink control information in data distribution for a plurality of terminals.

2. A terminal that comprising:
a reception unit that receives a downlink data channel in data distribution for a plurality of terminals; and
a control unit that assumes that, when semi-persistent scheduling is applied to the downlink data channel, an instruction to enable or disable feedback of an automatic retransmission request by the downlink control information via the downlink control channel common to a terminal group is applied to a reception of the downlink data channel immediately after the downlink control information and a reception of a subsequent downlink data channel.

3. A terminal that comprising:
a reception unit that receives a downlink data channel in data distribution for a plurality of terminals; and
a control unit that assumes that, when semi-persistent scheduling is applied to the downlink data channel, an instruction to enable or disable feedback of an automatic retransmission request by the downlink control information via the downlink control channel common to the terminal group is applied to a reception of a subsequent downlink data channel excluding the downlink data channel immediately after the downlink control information.

4. A terminal comprising:
a reception unit for receiving a downlink data channel in data distribution for a plurality of terminals; and
a control unit that determines, when releasing the downlink data channel to which semi-persistent scheduling is applied, whether feedback of an automatic retransmission request applied when the downlink data channel is released, is valid or invalid based on enabling or disabling of the feedback of the automatic retransmission request applied when the downlink data channel is received.

5. A radio communication method comprising the steps of:
receiving downlink control information; and
performing at least one of enabling or disabling feedback of an automatic retransmission request in the downlink channel based on a priority field included in the downlink control information in data distribution for a plurality of terminals.

6. A radio communication method comprising the steps of:
receiving a downlink data channel in data distribution for a plurality of terminals; and
when semi-persistent scheduling is applied to the downlink data channel, assuming that an instruction to enable or disable feedback of an automatic retransmission request by downlink control information via the downlink control channel common to a terminal group is applied to a reception of the downlink data channel immediately after the downlink control information and a reception of a subsequent downlink data channel.
